Europäisches Patentamt

European Patent Office

Office européen des brevets

(11) Publication number: 0 323 017
A1

## EUROPEAN PATENT APPLICATION

(21) Application number: 88310905.0

(22) Date of filing: 18.11.88

(51) Int. Cl.4 F16L 31/00 , F16L 37/04 , F16B 7/04

(30) Priority: 02.12.87 ZA 879055

(43) Date of publication of application:
05.07.89 Bulletin 89/27

(84) Designated Contracting States:
AT CH DE ES FR IT LI SE

(71) Applicant: AECI LIMITED
16th Floor Office Tower Carlton Centre
Commissioner Street P.O. Box 1122
Johannesburg 2000 Transvaal(ZA)

(72) Inventor: Crane, Andre Patrick
101 Juliana Princess Place Parktown
Johannesburg Transvaal(ZA)
Inventor: Rowe, Anthony John
39 Price Road Illiondale Road
Edenvale Transvaal(ZA)

(74) Representative: Reid, Thomas James et al
Imperial Chemical Industries PLC Legal
Department: Patents PO Box 6 Bessemer
Road
Welwyn Garden City Herts, AL7 1HD(GB)

(54) In-line connector.

(57) A connector (10) for joining two lengths of low
intensity shock tube (34), eg NONEL shock tube,has
a body provided with three passages (20,22) extending therethrough alongside one another,the passages
opening out into opposite faces (16) of the body. In
the preferred connector (10) one of the passages
(20) comprises two inwardly tapering portions (24),
which advantageously have longitudinally spaced cir-
cumferentially extending ribs (30) standing proud of
their surfaces to grip the shock tube (34). Conve-
niently the body is a moulding of synthetic plastics
material.

Fig.6.

## IN- LINE CONNECTOR

THIS INVENTION relates to an in-line connector for connecting together two lengths of low intensity shock tube whereby a detonation is transmitted.

According to the invention there is provided an in-line connector for connecting together two lengths of low intensity shock tube, the connector having a body provided with three passages extending therethrough alongside one another, and the body having an outer surface provided with two oppositely outwardly facing zones respectively through which opposite ends of each passage open out.

One of the passages may comprise two inwardly tapering portions, each portion having a plurality of longitudinally spaced circumferentially extending ribs standing proud of its surface, the portions having narrow inner ends which communicate with each other and broad outer ends which open respectively out of said zones. In other words, in said passage having two inwardly tapering portions, each portion has a mouth at its outer or broad end, the one mouth opening out through the one zone and the other mouth opening out through the other zone.

The ribs may be of a cross-section such that each tapering portion in longitudinal section has a profile made up of a plurality of triangular arrow heads arranged in series, the arrow heads pointing inwardly in a direction from the broad end of the portion to its narrow end, the arrow heads decreasing progressively in size from the broad end of the portion to its narrow end, and the point of each arrow head intersecting the base of the adjacent arrow head. In this arrangement the ribs are asymmetrical in cross-section, which aids insertion of the free end and adjacent end portion of a shock tube into the portion of the passage as described hereunder so that the shock tube is gripped by the ribs, and when the end portion of the shock tube is gripped by the ribs there, resists withdrawal of the end portion of the shock tube from the passage.

The body may be a moulding of synthetic plastics material, which may be elastomeric and may be resiliently flexible.

The body may be flattened and elongated, having a pair of oppositely outwardly facing elongated major faces, the passages being straight and arranged side-by-side in series and the passages extending in a direction parallel to one another so that they provide a central passage on opposite sides of which are two outer passages, the zones through which the passages open out being located at opposite ends of the major faces. The major faces may be flat and parallel to each other, having side edges which are interconnected by a pair of flat parallel elongated oppositely outwardly facing side faces of the body, the passages being located midway between the major faces, the central passage being located midway between the side faces and the outer passages being equally spaced from the central passage on opposite sides thereof. The major faces may be thus more or less elongate rectangular in outline, the body being in the form of a flattened block having said pair of major faces, said pair of side faces and a pair of end faces which end faces provide the zones. When the passages are parallel, their central or polar axes will extend side-by-side in substantially the same plane, which plane will be parallel to the major faces.

In practice, the connecter will be intended for use with shock tube, or a range of shock tubes, with a particular outer diameter or range of diameters, and a particular inner diameter or range of diameters. Thus, preferably, the shock tube should be receivable in the mouths of the tapered portions of the ribbed passage to be gripped by at least one of the ribs therein; the shock tube should be receivable through the other passages with a fit no tighter than a sliding fit; and the inner diameter of the shock tube should preferably be such that the ratio of the inner diameter of the shock tube to the inner diameter of the narrowest portion of the ribbed tube, where the tapered portions communicate, is in the range 2:1 to 5:6. Usually a particular size (inner and outer diameters) of shock tube such as NONEL shock tube will be employed, and suitable dimensions for the connector can be selected by routine experimentation. In this regard, a shock tube can typically project a detonation over a gap of several centimeters, a connector whose passages are no more than say 5-10cm in length, should be suitable. Naturally, however, it is desirable in use to have the narrowest part of the ribbed passage the same diameter as the internal diameter of the shock tube, and to have a ribbed passage in which ends of lengths of shock tube can be gripped by the ribs in closely spaced or preferably abutting end-to-end relationship. These dimensions are however not regarded as critical, and a degree of design latitude can be expected.

The invention extends also to a connection between two lengths of low intensity shock tube which connection comprises a connector as described above, the lengths of shock tube each passing through one of the passages and the lengths of shock tube having end portions emerging respectively from the zones of the body, each end portion extending into the end of the remaining passage which opens through the zone from which said end portion emerges, so that the free ends of the lengths of shock tube are located in said remaining passage in end-to-end relationship at a spacing which permits a detonation passing along one length to its said free end to be propagated into the other length.

The invention extends further to a method of connecting together two lengths of low intensity shock tube in line and end-to-end so that a detonation passing along one length to its end can be propagated into the other length, the method comprising threading each length of shock tube through one of the passages of a connector as described above, so that the lengths have end portions which emerge respectively from the zones of the body, and inserting said end portions into opposite ends of the remaining passage so that the free ends of the lengths of shock tube are located in said remaining passage in end-to-end relationship at a spacing which permits a detonation passing along one of the lengths to be propagated into the other.

The invention will now be described, by way of example, with reference to the accompanying diagrammatic drawings in which:-

Figure 1 shows a plan view of a connector in accordance with the invention;

Figure 2 shows a side elevation of the connector of Figure 1;

Figure 3 shows an end elevation of the connector of Figure 1;

Figure 4 shows a section in the direction of line IV-IV in Figure 3;

Figure 5 shows a section in the direction of line V-V in Figure 1; and

Figure 6 shows a view corresponding to Figure 4 of the connector in use.

In the drawings, reference numeral 10 generally designates a connector in accordance with the present invention, suitable for connecting together, in-line, two lengths of NONEL shock tube.

The connector 10 is elongate rectangular in shape, being more or less the size and shape of a match box, and being shown full size in the drawings. The connector 10 has a pair of oppositely outwardly facing major faces 12, a pair of side faces 14, and a pair of end faces 16.

Three passages extend side-by-side lengthwise along the connector 10, the passages having polar axes which are parallel and coplanar, being located in a common plane 18 midway between and parallel to the major faces 12. The axes of the passages are equally spaced. The passages comprise a central passage 20 and a pair of outer passages 22. The central passage 20 is midway between the side faces 14.

The passages 22 are of right cylindrical shape and constant diameter, whereas the passage 20 comprises two tapered portions 24, which taper inwardly from the broad ends or mouths 26 at opposite ends of the passage 20 and communicate at a narrow central part or opening 28, at the narrow inner ends of the tapered portions.

The internal curved surface of the passage 20 is provided with a plurality of longitudinally spaced circumferentially extending ribs 30. The ribs 30 are asymmetrical in cross-section, so that the passage 20, in longitudinal section as shown in Figure 4, has the profile of two series of arrow heads aligned end-to-end and pointing inwardly towards the narrow part 28 of the passage 2o. These arrow heads reduce progressively in size from the mouths 26 towards said narrow part 28. The arrow heads of each portion 24 point inwardly in a direction from its mouth 26 to the opening at 28, and the point of each arrow head intersects the base of the adjacent arrow head in that portion 24.

In other embodiments of the invention (not shown) the ribs 30 can be dispensed with so that the portions 24 are smooth tapers, or the ribs 30 can be replaced by screw threaded formations which function similarly to the ribs.

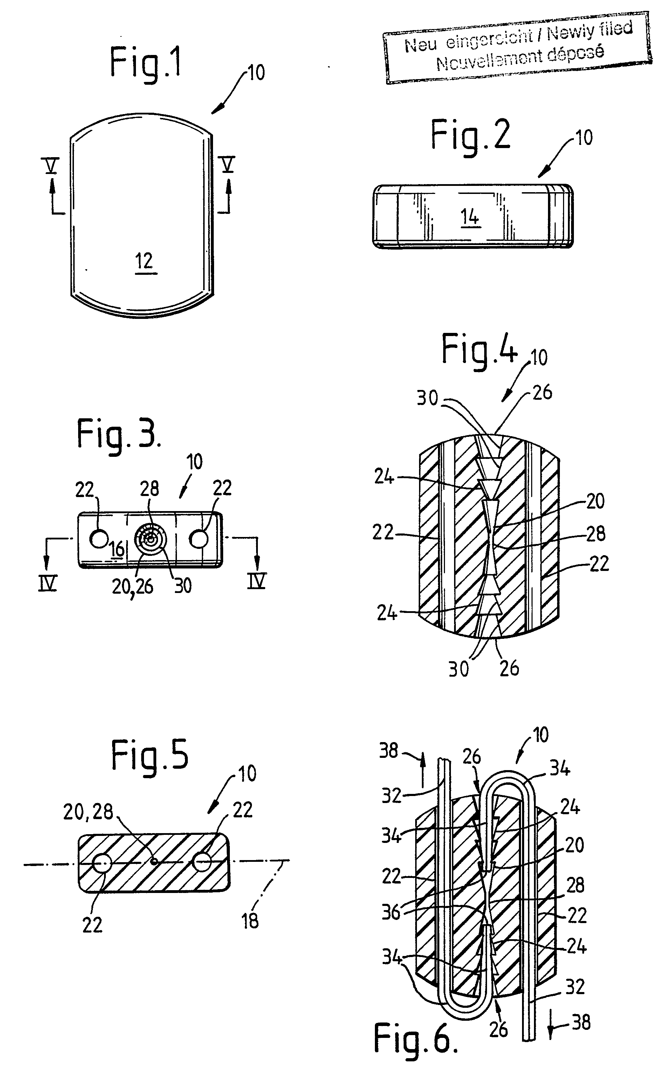

In use to connect two lengths of NONEL shock tube together, the connector 10 is employed as shown in Figure 6, in which the same reference numerals are used as in Figures 1 to 5, unless otherwise specified.

In Figure 6 the lengths of NONEL shock tube are designated 32. To connect the lengths 32 together, they are each threaded through a respective one of the passages 22 as shown so that it has an end portion 34 which emerges from one of the end faces 16, the end portions 34 thus emerging respectively from opposite end faces 16. Each end portion 34 is bent over and thrust into the adjacent mouth 26 of the passage 28. The tips or free ends 36 of the end portions 34 are thrust into the portions 24 of the passage 20, so that each end portion 34 is gripped by one or more of the ribs 30, said tips or free ends 36 being axially spaced from and aligned with each other, on opposite sides of the narrow part 28 of the passage 20. This spacing is such that a detonation propagated along either or the lengths 32 of shock tube can bridge the spacing between the tips 36, via the inner ends of the portions 24 of the passage 20 and the narrow part 28, so that the detonation will be propagated along the other length of shock tube 32.

The invention accordingly provides a simple and inexpensive, and yet reliable device for the in-line connection of two lengths of shock tube. In this regard it should be noted that if a force is exerted in the direction of arrows 38 on the respective lengths of shock tube 32, the lengths of shock tube 32 will be held firmly in place in the connector 10, indeed to the extent where the lengths 32 of shock tube will snap before they are withdrawn from the connector 10. Furthermore, it should be noted that the connector is suitable for use in moist conditions, the ribs 30 acting to seal the tips 36 of the shock tube lengths 32 from the exterior, where they grip the end portions 34 of the shock tube lengths.

Although circumferential or annular ribs are shown at 30 in the drawings, these can naturally be replaced by a helically extending rib provided by a thread which will have substantially the same effect. Indeed, the ribs can be omitted altogether, and the tapered portions 24 can have smooth inner surfaces.

## Claims

1. An in-line connector (10) for connecting together two lengths (32) of low intensity shock tube, characterised in that the connector has a body provided with three passages (20,22) extending therethrough alongside one another, the said body having an outer surface provided with two oppositely outwardly facing zones (16) respectively through which opposite ends of each passage open out.

2. A connector as claimed in claim 1, characterised in that one of the passages comprises two inwardly tapering portions (24) having narrow inner ends which communicate with each other and broad outer ends which open respectively out of said zones.

3. A connector as claimed in claim 2, characterised in that each inwardly tapering portion (24) has a plurality of longitudinally spaced circumferentially extending ribs (30) standing proud of its surface.

4. A connector as claimed in claim 3, characterised in that the ribs (30) are of a cross-section such that each tapering portion (24) in longitudinal section has a profile made up of a plurality of triangular arrow heads arranged in series, the arrow heads pointing inwardly in a direction from the broad end of the portion to its narrow end, the arrow heads decreasing progressively in size from the broad end (26) of the portion to its narrow end and the point of each arrow head intersecting the base of the adjacent arrow head.

5. A connector as claimed in any one of the preceding claims, characterised in that the body (10) is a moulding of synthetic plastics material.

6. A connector as claimed in any one of the preceding claims, characterised in that the body (10) is flattened and elongated, having a pair of oppositely outwardly facing elongated major faces (12), the passages (20, 22) being straight and arranged side-by-side in series and the passages extending in a direction parallel to one another so that they provide a central passage (20) on opposite sides of which are two outer passages (22), the zones (16) through which the passages open out being located at opposite ends of the major faces.

7. A connector as claimed in claim 6, characterised in that the major faces (12) are flat and parallel to each other and have side edges which are interconnected by a pair of flat parallel elongated oppositely outwardly facing side faces (14) of the body, the passages being located midway between the major faces (12), the central passage being located midway between the side faces (14) and the outer passages (22) being equally spaced from the central passage (20) on opposite sides thereof.

8. A connection between two lengths of low intensity shock tube (32) which connection comprises a connector as claimed in claim 1, the lengths of shock tube each passing through one of the passages (22) and the lengths of shock tube having end portions (34) emerging respectively from the zones (16) of the body, each end portion (34) extending into the end of the remaining passage which opens through the zone (16) from which said end portion (34) emerges, so that the free ends (36) of the lengths of shock tube are located in said remaining passage (20) in end-to-end relationship at a spacing which permits a detonation passing along one length to its said free end to be propagated into the other length.

9. A method of connecting together two lengths of low intensity shock tube in line and end-to-end so that a detonation passing along one length to its end can be propagated into the other length, the method comprising threading each length of shock tube (32) through one of the passages of a connector as claimed in claim 1, so that the lengths (32) have end portions, (34) which emerge respectively from the zones (16) of the body, and inserting said end portions (34) into opposite ends of the remaining passage (20) so that the free ends (36) of the lengths of shock tube are located in said remaining passage in end-to-end relationship at a spacing which permits a detonation passing along one of the lengths (32) to be propagated into the other.

Fig.1

Fig.2

Fig.3.

Fig.4

Fig.5

Fig.6.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-1 817 776  (SIPE)<br>--- | | F 16 L   31/00<br>F 16 L   37/04<br>F 16 B    7/04 |
| A | US-A-4 595 724  (KOBLITZ)<br>----- | | |

TECHNICAL FIELDS SEARCHED (Int. Cl.4)

F 16 L
F 16 B
H 01 R

The present search report has been drawn up for all claims

| Place of search | Date of completion of the search | Examiner |
|---|---|---|
| THE HAGUE | 24-02-1989 | NARMINIO A. |

EPO FORM 1503 03.82 (P0401)